# EUROPEAN PATENT APPLICATION

(11) **EP 4 258 517 A1**
(43) Date of publication of application: **11.10.2023**
(21) Application number: 23162662.3
(22) Date of filing: 17.03.2023
(51) Int. Cl.: H02J 50/20, H02J 50/50, H02J 50/80, H02J 50/90

(54) **WIRELESS CHARGING METHOD AND SYSTEM**

(30) Priority: 19.03.2022 US 202217699092
(71) Applicant: Wireless Electrical Grid LAN, WiGL Inc., Hampton, VA 23666 (US)
(72) Inventor: GLOVER, Ahmad L.D., Smithfield, VA (US); CHIBANE, Cherif, Tewksbury, MA (US)
(74) Representative: Kador & Partner Part mbB

(57) **Abstract**

Disclosed herein is a system controller in electronic communication with at least one wireless base charger system coupled to a power source, at least one transmitter, the wireless charging system configured to determine a location of at least one device receiver located within a physical space and to provide wireless energy delivery comprising directing one or more directional electromagnetic energy beams from at least one transmitter to the location of the device receiver at a distance greater than or equal to 50 cm from the transmitter; each device receiver configured to receive and convert one or more of the directional electromagnetic energy beams into electrical energy and store at least a portion of the electrical energy in an intermediary electrical storage device, and to direct electrical energy from the intermediary electrical storage device to a connected electrical device in electrical connection with the device receiver, to charge and/or power the connected electrical device. Methods of using the system are also disclosed.

## Description

### CROSS REFERENCE TO RELATED APPLICATIONS

For purposes of US practice, the present application is a Continuation in Part of US Pat. App. 17/163,001, filed January 29, 2021; a Continuation in Part of US Pat. App. 17/033,824, filed September 27, 2020; a Continuation in Part of US Pat. App. 17/019,312, filed September 13, 2020; a Continuation in Part of US Pat. App. 16/482,347, filed July 31, 2019, now US 10,992,158 issued April 27, 2021, which is a 35 U.S.C. §371 National Stage patent application of International Pat. App. PCT/US18/15625, filed on January 28, 2018, which is a Continuation in Part of US Pat App. 15/640,574, filed July 2, 2017, now US 9,985,465 issued May 29, 2018, all of which claim priority to US Provisional Pat. App. 62/506737, filed May 16, 2017. The disclosures of all the above patents, provisional applications and non-provisional patent applications are hereby incorporated herein by reference.

### BACKGROUND

This invention relates to a wireless charging method and system for charging an electronic power-consuming device. An Internet Of Think (IoT) device, a home appliance, remote sensor embedded in concrete, and other hard to reach places such as underground and space.

There is a need for wireless sources of power useful at distances beyond those achievable by inductive near field power supplies. There is also a need in the art for an efficient wireless powering solution to power and/or recharge a device within several meters, up to several hundred meters or beyond the location of the charging station and which follows the device upon movement.

### SUMMARY

In an embodiment, a wireless charging system comprises a system controller in electronic communication with at least one base transmitter coupled to a power source, configured to direct one or more directional electromagnetic energy beams from the transmitter to a location of a device receiver at a distance greater than or equal to 1 m from the transmitter; the device receiver configured to receive and convert the one or more directional electromagnetic energy beam into electrical energy and store at least a portion of the electrical energy in an intermediary electrical storage device, and to direct electrical energy from the intermediary electrical storage device to a connected electrical device to charge and/or power the connected electrical device.

In embodiments, a method of powering an electrical device, comprises directing one or more directional electromagnetic energy beams from a transmitter of a wireless charging system to a device receiver connected to an electrical device through an intermediary electrical storage device; and directing electrical energy from the intermediary electrical storage device to the electrical device to power or charge the electrical device; wherein the wireless charging system is according to any one of the embodiments disclosed herein.

### BRIEF DESCRIPTION OF THE DRAWINGS

A wide variety of potential practical and useful embodiments will be understood through the following detailed description of various embodiments, with reference to the accompanying drawings in which:
FIG. 1 is a block diagram of a system according to an embodiment disclosed herein; and
FIG. 2 is a flowchart of an authorization method according to an embodiment disclosed herein;

### DETAILED DESCRIPTION

For purposes herein, a directional electromagnetic energy beams refers to a ray or plurality of rays of electromagnetic radiation energy having a general direction and width. It is to be understood that reference to a directional electromagnetic energy beam does not refer to, and is in contrast to power transmission signals made up of power transmission waves, in one or more trajectories by manipulating the phase, gain, and/or other waveform features of the power transmission waves, and/or by selecting different transmit antennas in which the underlying power transmission waves converge at a location in space, resulting in certain forms of interference, one form being "constructive interference," formed by a field of energy caused by the convergence of the power transmission waves such that they add together and strengthen the energy concentrated at that location establishing a field of energy, or "pocket of energy" at that relative location, and another being "destructive interference" wherein the waves subtract from each other and diminish the energy concentrated at that location.

For purposes herein, a secondary directional electromagnetic energy beam refers to a directional electromagnetic energy beam transmitted from one transmitter and/or transceiver equipped device receiver to another device receiver.

As used herein, WiGL refers to wireless power grid local area network. A WiGL routing policy refers to a system of defined rules embodied in machine instructions and/or software and/or hardware configured to make and/or guide decisions in transferring wireless energy via directional electromagnetic energy beams to electrical devices.

A WiGL routing table refers to a data structure of defined rules accessible by machine instructions and/or software and/or hardware configured to make and/or guide decisions in transferring energy via directional electromagnetic energy beams to electrical devices.

For purposes herein, peer-to-peer directional wireless power distribution refers to a device receiver of the wireless charging system further equipped with either a transmitter or a transceiver and is configured to direct at least one secondary directional electromagnetic energy beam from a first device receiver towards a determined location of at least one second device receiver.

For purposes herein, a meshed ad hoc wireless power grid local area network refers to a local network topology in which the infrastructure nodes connect directly, dynamically, and non-hierarchically to as many other nodes as possible and cooperate with one another to efficiently route power, or power and data between the base charger and the various clients or nodes on the network.

It is to be understood that reference to a wireless charging system herein also, and simultaneously refers to a wireless power system and/or a wireless power delivery system. Accordingly, although reference is made to a wireless charging system, the system may also deliver power which is utilized to directly power the device subject to the limitations of the system and device receiver e.g., power is received and directed through the intermediary electrical storage device directly to power the attached electrical device.

In embodiments, a wireless charging system, comprises a system controller in electronic communication with at least one base transmitter coupled to a power source, configured to direct one or more directional electromagnetic energy beams from the transmitter to a location of a device receiver at a distance greater than or equal to 1 m from the transmitter; the device receiver configured to receive and convert the one or more directional electromagnetic energy beam into electrical energy and store at least a portion of the electrical energy in an intermediary electrical storage device, and to direct electrical energy from the intermediary electrical storage device to a connected electrical device to charge and/or power the connected electrical device.

In embodiments, the device receiver is configured to be removably electrically connected to the electrical device via a disengageable connecter.

In embodiments, the system controller is configured to determine a location of the device receiver within a physical space and upon motion of the device receiver within the physical space, update the location of the device receiver.

In embodiments, the wireless charging system is configured for peer-to-peer power transmission, wherein a first device receiver comprises a transmitter or a transceiver in electronic communication with a receiver controller, configured to direct at least one secondary directional electromagnetic energy beam from the first device receiver towards a location of at least one second device receiver utilizing at least a portion of energy stored in the intermediary electrical storage device of the first device receiver, independent of a status of any one device receiver. In embodiments, the status of any one device receiver comprises an authorization status of if the device receiver is authorized, or is not authorized to direct received energy to an attached electrical device.

In embodiments, the authorization status comprises: an authorization key; a lookup table; an identifier unique to the device receiver; an identifier unique to the electrical device; a user account; a service subscription; a prepaid subscription; a blockchain permission; a blockchain transaction; or a combination thereof.

In embodiments, the authorization status is base at least in part on an amount of power directable to the attached electrical device.

In embodiments, the wireless charging system is further configured to cause an indication perceivable by an end user of the attached electrical device indicating the authorization status of the device receiver to direct received energy to the attached electrical device. In embodiments, the wireless charging system is configured such that when the authorization status is the device receiver is not authorized to direct received energy to the attached electrical device, the system causes an indication perceivable by an end user of the attached electrical device which allows the end user to change the authorization status. In embodiments, the end user changing the authorization status comprises a financial transaction. In embodiments, the financial transaction comprises a cryptocurrency financial transaction, a blockchain financial transaction, or a combination thereof.

In embodiments, the wireless charging system is configured such that wherein the authorization status is not authorized, the device receiver is configured to receive one or more of the directional electromagnetic energy beams, one or more of the secondary electromagnetic energy beams, or both, from the wireless charging system and convert into electrical energy and store at least a portion of the electrical energy in a corresponding intermediary electrical storage device, and to prevent the directing of electrical energy from the intermediary electrical storage device to the attached electrical device.

In embodiments, the device receiver is further configured such that wherein the authorization status is not authorized, to direct one or more secondary directional electromagnetic energy beams from the device receiver towards a location of at least one other second device receiver utilizing at least a portion of energy stored in the intermediary electrical storage device of the device receiver.

In embodiments, the device receiver is configured to request wireless energy delivery from the wireless charging system based at least in part on a level of charge of the connected electrical device. In embodiments, the system controller and a first device receiver are in bidirectional electronic communication, wherein the first device receiver and a second device receiver are in bidirectional electronic communication with each other, and wherein second device receiver is in bidirectional electronic communication with the system controller via the first device receiver. In embodiments, the bidirectional electronic communication comprises a short-range wireless personal area network. In embodiments, the system controller and the device receiver are in bidirectional electronic communication at least in part via an electronic communications network provided by the connected electrical device.

In embodiments, the device receiver is configured to receive and convert a plurality of different directional electromagnetic energy beam into electrical energy at the same time or essentially the same time.

In embodiments, a method of powering or charging an electrical device, comprises directing one or more directional electromagnetic energy beams from a transmitter of a wireless charging system according to one or more embodiments disclosed herein, to a device receiver connected to an electrical device through an intermediary electrical storage device; and directing electrical energy from the intermediary electrical storage device to the electrical device to power or charge the electrical device.

In embodiments of the method, the directing electrical energy from the intermediary electrical storage device to the electrical device to power or charge the electrical device comprises, or is at least partially based on a financial transaction.

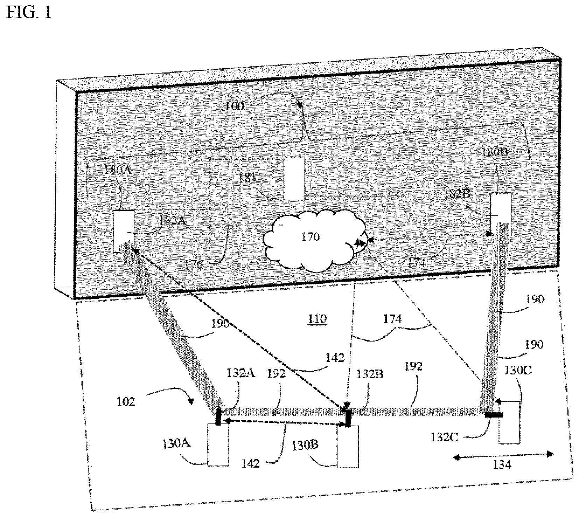

FIG. 1 is a block diagram of an exemplary embodiment of a wireless charging system according to embodiments disclosed herein. The wireless charging system generally indicated as 100 comprises a plurality, e.g., two or more, base chargers 180A, 180B, each comprising one or more transmitters 182A and 182B, respectively, configured to direct one or more directional electromagnetic energy beams 190 to a device receiver 132A, 132B, and 132C, of a like plurality of corresponding electrical devices 130A, 130B, and 130C, respectively, located within a physical space 110. Each of the device receivers 132 and/or the electrical devices 130 in electrical communication with the device receivers are adapted to issue a request 142 (only one instance of which is shown for simplicity), to the wireless charging system 100, e.g., to a receiver coupled to the base charger 180. The device receiver 132 of the electrical device 130 is adapted to receive and convert one or more electromagnetic energy beams 190 provided by the wireless charging system to electrical energy in an amount sufficient to power and/or charge the electrical device 130.

As is further shown in FIG. 1, in embodiments the plurality of electrical devices 130 form a peer-to-peer power distribution network system 102 that generates directional beams 192, which can provide power to another one of the electrical devices e.g., 130B.
The base chargers 180A, 180B are electrically coupled to respective electrical energy sources 181, e.g., electrical outlets as illustrated or high-capacity batteries (not shown) or any other suitable power source.

### The Wireless Power Delivery System

In embodiments, the wireless power delivery system, also referred to herein interchangeably as a wireless charging system, according to one or more embodiments herein comprises a system controller in electronic communication with at least one base charger. It is to be understood that the system controller and the at least one base charger may be separate components, or may be integrated components, or partially integrated components that may, in embodiments, provide at least some of the same functions. The system controller and/or the base charger are coupled to a power source and at least one transmitter. The wireless charging system is configured e.g., via the system controller, to determine a presence and location of at least one device receiver located within a physical space and to provide wireless energy delivery to the device receiver comprising directing one or more directional electromagnetic energy beams from at least one transmitter to the location of the device receiver at a distance greater than is suitable for an inductive, magnetic, or otherwise "close proximity" charging system, e.g., greater than is possible or equal to about 10cm, or about 20cm, or about 30 cm, or about 40cm, or 50 cm from the transmitter.

For purposes herein it is to be understood that reference to electronic communication between the wireless charging system and the device receiver may include direct electronic communication between the wireless charging system and the device receiver, direct electronic communication between the wireless charging system and the electrical device associated with the device receiver, electronic communication between the wireless charging system and the electrical device associated with the device receiver through the associated device receiver, electronic communication between the wireless charging system and a second device receiver through one or more first device receivers (peer-to-peer communication), or any combination thereof.

The base charger is configured to transmit directional electromagnetic energy beams which are receivable by the device receivers, and which may be received by the device receivers, and the power harvested by the device receivers, at least a portion of which is then converted into a useable source of electrical energy for associated electrical devices and/or at least a portion of which may be utilized for operation of the device receivers and various systems thereof.

The entire wireless charging system is in electrical communication with a power source which may include so called line current e.g., from a power grid, or from a generator, a solar cell, battery, and/or any other suitable portable energy/power source.

The wireless charging system may also transmit data to, and receive data or other forms of electronic communication from one or more device receivers associated with one or more corresponding electronic or electrically powered devices, or an electrical device associated with a device receiver. In embodiments, the wireless base charging system may further include one or more electronic communication (network) components and be in wireless and/or wired electronic communication with one or more of the device receiver, as well as various other networks including wireless and/or wired LANs, the internet, intranets, and/or the like. In embodiments, one or more of the system components may also be in wireless or wired electronic communication with other components of the system, e.g., a first of a plurality of base charger may be in wired or wireless electronic communication with another base chargers of the same system. In such embodiments, the system controller may be further coupled to one or more transmitters and/or transceivers configured to transmit data to, and receive data or other forms of electronic communication from other electrical devices, as well with other wireless charging systems, other data management systems, databases, managers, service systems, components, and/or the like, as disclosed herein.

Although several of the embodiments mentioned below describe the directing of the directional electromagnetic energy beams as radio frequency (RF) waves, it should be appreciated that the directional electromagnetic energy beams may be in any form that is capable of being propagated through space, and that is capable of being converted into a source of electrical energy regardless of the electromagnetic spectrum used. The transmitter transmits the power as one or more directional electromagnetic energy beams directed at the device receiver(s). In embodiments, one or more transmitters may transmit a plurality of directional electromagnetic energy beams towards a single device receiver.

In addition to RF wave transmission techniques, the transmitters may transmit any type of energy which may be converted into electrical power. Non-limiting exemplary transmission techniques for energy that can be converted by a receiving device into electrical power include ultrasound, microwave, resonant and inductive magnetic fields, laser light, infrared, or other forms of electromagnetic energy which may be transmitted as directional electromagnetic energy beams. In addition, the transmitter unit of a base charger may comprise multiple transmitters (e.g., a transmit array), both for RF transmission of power and for other power transmission methods. The base charger may include a plurality of transmit arrays and/or may comprise multiple transmitters that are physically separated from one-another about a physical space, and/or may be located in a single structure.

In embodiments, the wireless charging system is configured to determine the presence of a device receiver and/or an electrical device within the 3D space powerable by the wireless charging system, and also determine the location of the device receiver without requiring any action on the part of the device receiver. This may include utilizing one or more proximity detectors, sensors, algorithms, and the like, which may be physical devices, or which may be virtual devices or software that utilize the transmitters (and/or transceivers) and device receivers of the wireless charging system, or any combination thereof.

In some embodiments, the wireless charging system may be configured to scan and/or query a device receiver's broadcasting advertisement signals or a device receiver may transmit an advertisement signal to the transmitter. The advertisement signal may announce the device receiver's presence to the transmitter and/or the transmitter may announce its presence to the device receiver. Upon determining a presence of the device receiver within the 3D space reachable by the wireless charging system, an association between the device receiver and the wireless charging system may be triggered e.g., an association between the wireless charging system controller and/or base station and the device receiver.

In one or more embodiments, the advertisement or other signal may communicate information that may be used by various devices (e.g., system controller, base chargers, client devices, sever computers, managers, other device receivers, and the like) to execute and manage the delivery and directing of the one or more directional electromagnetic energy beams from at least one transmitter to the location of the device receiver.

Information contained within the advertisement or other communication signal may include a device identifier (e.g., MAC address, IP address, UUID), the voltage of electrical energy received, a client device power consumption, a request from the device for power from the wireless charging system, an authorization status, user or device account information, the type and capability of the device receiver and/or the associated electrical device to receive the one or more directional electromagnetic energy beams, pairing information, information directed to the location of the device receiver, changes of location and/or movement of the device receiver, and/or other types of data related to the delivering of wireless energy to the device, and reception of the energy by the electrical device.

Once the location of the device receiver is identified, and a need for power is established, e.g., based on a request for power by the device receiver or the device attached to the device receiver, and/or from another device receiver via peer-to-peer wireless power transmission, or any combination thereof, if not present, the wireless power charging system may establish electronic communication with the device receiver, and/or configure the device receiver to receive one or more directional electromagnetic energy beams, and/or communicate control signals over one or more communication channels, and begin directing one or more directional electromagnetic energy beams from at least one transmitter to the location of the device receiver.

In embodiments, the wireless charging system is further configured to utilize information contained in a device receiver's advertisement and/or request signal, or in subsequent control signals and other electronic communication received from the device receiver, to determine how and where to direct the one or more directional electromagnetic energy beams to the device receiver so that the device receiver may receive, harvest, and utilize the power in the most efficient way.

In embodiments, the wireless charging system comprises a processor or data processing system configured to execute software modules capable of automatically identifying the power transmission signal features needed to deliver one or more directional electromagnetic energy beams to the device receiver based at least in-part on information received from the device receiver, such as the voltage and/or current produced by the electrical energy harvested by the device receiver from the one or more directional electromagnetic energy beams. It should be appreciated that the functions of the processor and the software modules may also be implemented at least in part by Application Specific Integrated Circuits (ASIC), or a system comprising the same.

Once the wireless charging system determines the location and appropriate parameters to use when transmitting the one or more directional electromagnetic energy beams, and the device receiver is configured to receive and harvest power from the one or more directional electromagnetic energy beams, the system is configured to utilize one or more transmitters to begin and/or maintain the directing of one or more directional electromagnetic energy beams to the location of the device receiver, which may be over a separate channel from the channel over which the bidirectional electronic communication is established (e.g., utilized for communication of various control signals).

In embodiments, the device receiver may generate control data containing information indicating the effectiveness of the directing of the one or more directional electromagnetic energy beams by the wireless charging system, e.g., the amount of power being harvested by the device receiver. The device receiver may then transmit or otherwise engage in bidirectional electronic communication with the wireless charging system to transmit and receive various control signals containing control data and the like.

In an embodiment, the wireless charging system may automatically detect a presence and a location of a device receiver within a 3D space at a distance greater than or equal to 50 cm from the transmitter and without receiving a request from a device receiver, automatically direct one or more directional electromagnetic energy beams to the location of the device receiver and/or establish electronic communication with the device receiver. The wireless power device receiver may then power or charge electrically connected electronics devices such as a client device.

In embodiments, a base charger may power multiple device receivers simultaneously. In embodiments, a plurality of base chargers may direct power to the same device receiver. In embodiments, the base charger may direct a plurality of different types of directional electromagnetic energy beams, e.g., at different frequencies, and/or using different configurations, from one or more transmitter to a device receiver to increase the amount of power that may be harvested by the device receiver.

In embodiments, the wireless charging system is configured to determine a location of at least one device receiver located within a physical space proximate to the transmitter. It is to be understood that this device receiver is not necessarily within close proximity to the wireless charging system, e.g., 10 cm or less as is required by inductive or magnetic near field charging systems, but instead may be located beyond the distance required by near-field charging systems (i.e., beyond the distance at which near-field - inductive power systems are operative). In embodiments, the device receiver may be located at least 20cm away from a wireless power charging system transmitter, or at least 30 cm, or at least 40 cm, or at least 50 cm, or at least 60 cm, or at least 70 cm, or at least 80 cm, or at least 90 cm, or at least 100 cm, or at least 200 cm, or at least 300 cm, or at least 400 cm, or at least 500 cm, or at least 1000 cm, or at least 2000 cm, or at least 5000 cm, from the wireless base charging system, and is limited only by the amount of power that may be transmitted and the environment of the 3D space.

The wireless charging system may then establish a connection or otherwise associates with a device receiver. That is, in some embodiments, wireless base charging system and/or the system controller and the device receiver(s) may establish wireless unidirectional or bidirectional communication over which various control data is communicated between the two devices over a wireless communication protocol capable of transmitting information between two processors of electrical devices (e.g., Bluetooth^{®}, Bluetooth Low Energy (BLE), Wi-Fi, NFC, ZigBee^{®}). In embodiments, using for example a Bluetooth^{®} or Bluetooth^{®} variant, these data may be used by the base charger to determine the location of the device receiver.

The wireless charging system wireless provides power to the device receiver, which in an embodiment is the result of a request for power from the intended receiver/device, and then to the associated electrical device by directing one or more directional electromagnetic energy beams from at least one transmitter to the location of the device receiver.

In embodiments, the wireless charging system forms a wireless power grid local area network comprising one or more base chargers directing one or more directional electromagnetic energy beams to device receivers, in which each of the device receivers and base chargers present are nodes of a network. In some embodiments the wireless charging system forms a wireless power grid local area network comprising a peer-to-peer directional wireless power distribution meshed local area network, in which each of the device receivers and base chargers present are nodes of the meshed network, and/or which may be a meshed ad hoc wireless power grid local area network comprising base charger-too-device receiver power distribution and device receiver-too-device receiver power distribution, in which each of the device receivers and base chargers present are nodes of the meshed wireless power grid local area network.

In some embodiments, the electronic communication includes data inputs used by the various antenna elements responsible for controlling production and transmission/directing of the directional electromagnetic energy beams. This may include various data signals produced by the device receiver. The electronic communication may be by way of various protocols capable of communicating data between processors, such as Bluetooth^{®}, RFID, infrared, near-field communication (NFC), IEEE 802 standards, "fog" computing standards, edge computing standards, and the like. Such electronic communication may include information between the transmitter and the device receiver used to adjust the power transmission, provide information related to status, efficiency, user data, power consumption, billing, geo-location, authorization, or other status, and/or other types of information.

The bidirectional communication between the wireless charging system and the device receiver may use one or more advertisement or other signals to determine a set of power transmission signal features for transmitting one or more directional electromagnetic energy beams from at least one transmitter to the location of the device receiver thereby providing power to the device receiver. Non-limiting examples of features of directing of the directional electromagnetic energy beams may include phase, gain, timing, frequency division multiple access (multiplexing) (FDMA) parameters, code division multiple access (multiplexing) (CDMA) parameters, polarization division multiple access (multiplexing) (PDMA) parameters, time division multiple access e.g., time division multiplexing (TDMA) parameters, encryption parameters, and the like.

In embodiments, the wireless charging system may use power transmitters incorporating or configured to communications methods such as Wi-Fi, ZigBee, and LAN amongst others. Likewise, the power device receivers may include a power device receiver application and/or system comprising a BTLE API, a BTLE chip, and/or an antenna array so configured. In embodiments, one or more of the power device receiver applications may be an executable program loaded into a non-volatile memory within a device receiver, and/or may include a BTLE API enabling effective interaction between the various components. In embodiments, the antenna array is capable of harvesting power from the one or more directional electromagnetic energy beams.

### Electronic Communication

In some embodiments, client devices are able to communicate user requests to the wireless charging system e.g., via the system controller, including requests to initiate charging, pause charging, end charging, authorize payment transactions, and the like.

In embodiments, the wireless charging system is configured to undergo a pairing process with one or more device receivers as is commonly understood in the art, to facilitate electronic communication. The pairing process may start when an electrical device is identified by the wireless charging system, and/or when the electrical device requests power from the system or otherwise identifies available power device receivers in a system.

In some embodiments, the signal strength of the electrical device may be capable of monitoring the location of the device receiver. In embodiments, the wireless charging system is configured to periodically monitor for the presence of device receivers and/or the location of device receiver(s), and may conduct such pairing with the device receiver when within a range of proximity suitable to perform the pairing. If one of the device receivers is within range the electrical device may proceed to check one or more databases to determine if the device receiver is already paired, authorized for receiving power, and/or the like. If the power device receiver is associated with another electrical device, the electrical device may continue to scan for power device receivers and track their proximity. If the device receiver has no associations, the wireless charging system may commence the pairing protocol. The process may include the use of timers, sensors, and/or the like to continuously monitor the location of the device receiver. In embodiments, a successful pairing of the device receiver may be recorded and/or update in a corresponding database, associating an electrical device ID with an ID of the associated device receiver. In other embodiments, the wireless charging system is configured to analyze signal strength measurements, efficiencies, usage rates, billing information, conduct analysis and/or compare it with predefined reference values. After updating the information in an internal database, the electrical device may send a copy of the updated database to the power transmitter and pairing process may end. Likewise, the wireless charging system may be configured to execute an un-pairing process wherein the link is terminated.

### Base Charger

The wireless charging system further comprises one or more base chargers capable of directing one or more directional electromagnetic energy beams into 3D space to a distance of greater than 50cm that are receivable by the device receivers. Base charges include one or more transmitters/transceivers and their associated components, systems, and the like required to direct one or more directional electromagnetic energy beams towards a location of a device receiver, e.g., in the form of an RF energy beam, e.g., a frequency modulated radio signal on a carrier frequency. The base charger further includes one or more antenna elements and may further include one or more RFICs, one or more microcontrollers, one or more communication components, and the like, in electrical connection with a power source. In embodiments, the base charger is disposed within a housing that may include all of the required components. In other embodiments, the base charger may be located in a plurality of housings, and/or may be located within another object or device, e.g., a lamp post, a television, a computer, and/or the like, which is in electrical communication with a power source. The various components of the base charger may comprise, and/or may be manufactured using, meta-materials, microprinting of circuits, nanomaterials, and the like.

In some embodiments, the wireless charging system comprises multiple base chargers, each of which may comprise multiple transmitters for directing the directional electromagnetic energy beams from at least one transmitter to the location of the device receiver. In embodiments, one or more base chargers may further include transmitters/receivers and/or transceivers configured for bidirectional electronic communication between the wireless charging system and a device receiver and/or a client device. These may be the same components utilized for directing power, and/or may be separate devices or configured differently.

In embodiments, the base charger may be configured to direct one or more directional electromagnetic energy beams at a first frequency or frequency range, and/or having a particular first configuration, at the same time direct one or more other directional electromagnetic energy beams at one or more other second frequencies or frequency ranges, and/or having a particular second configuration, to the location of the device receiver, thus allowing for an increase in the amount of power a device receiver may receive and harvest.

In embodiments, the base chargers may comprise one or more base controllers which may perform functions for, or instead of the system controller. In addition to the base charger being in electronic communication with the system controller, in some embodiments one or more base chargers may further be in electronic communication with other base chargers, other systems, managers, and/or the like.

### Antenna

In one or more embodiments, the transmitter of the base charger includes one or more transmitter elements, which may be utilized to both transmit the one or more directional electromagnetic energy beams and/or be configured for electronic communication. In embodiments, a plurality of antenna elements may be used to transmit the one or more directional electromagnetic energy beams, which may be from a single base charger or may be from multiple base chargers associated with the wireless charging system.

Antenna elements of the transmitter may use concepts of wave interference to determine certain directional electromagnetic energy beam features (e.g., direction of transmission, phase of power transmission signal wave), when transmitting the one or more directional electromagnetic energy beams including the use of constructive interference, beam steering, deconstructive interference, reflectance, and the like depending on the topography of a particular physical location.

In embodiments, the directional electromagnetic energy beams are formed and transmitted via various beamforming or spatial filtering processes in which one or more digital signals are processed for directional signal transmission and reception by the device receiver. In embodiments, this includes combining elements in an antenna array in such a way that signals at particular angles experience constructive interference while others experience destructive interference. Beamforming can be used at both the transmitting and receiving ends in order to achieve spatial selectivity. In embodiments, the directionality of the antenna array may be configured when transmitting to control the phase and/or relative amplitude of the signal at each transmitter, in order to create a pattern of constructive and destructive interference, which combine to produce a directional electromagnetic energy beam being directed to the location of the device receiver.

Suitable beamforming techniques for use herein include both conventional (fixed or switched beam techniques, adaptive beamforming techniques, e.g., phased array which may include desired signal maximization modes and/or interference signal minimization or cancellation modalities.

Examples of conventional beamformers include the Butler matrix approach which utilizes one or more fixed sets of weightings and time-delays or phasing to combine the signals in the antenna array. Other examples include delay-and-sum beamforming wherein the beam is steered by selecting appropriate phases for each of the antenna. Null-steering beamforming techniques may also be used along with frequency-domain beamforming wherein each frequency is treated as a narrowband signal, and the gains and phase shifts are separately optimized for each frequency. Beamforming may further include, and/or the directional electromagnetic energy beams may comprise multiple-input multiple-output (MIMO) coding, space-division multiple access (SDMA) coding, frequency division multiple access (FDMA) coding, time division multiple access (TDMA) coding; code division multiple access (CDMA) coding; orthogonal frequency division multiple access (OFDMA) coding; closed loop beamforming, multi-dimensional beamforming, and/or the like.

Examples of suitable adaptive beamforming techniques include multiple signal classification algorithms, iterative sparse asymptotic minimum variance algorithms, and the like, wherein information is combined with properties of the signals actually received by the array, typically to improve rejection of unwanted signals from other directions. This process may be conducted in either the time or the frequency domain.

In embodiments, adaptive beamforming is utilized which is configured to automatically adapt and respond to different situations. In embodiments, field programmable gate arrays may be employed along with the appropriate hardware and software. In embodiments, beamforming may include employing least mean squares (LMS) algorithms, maximum likelihood methods (MLM) algorithms, sample-matrix inversion (SMI) algorithms, recursive least square algorithms, conjugate gradient method algorithms, constant modulus algorithms, and/or the like.

In embodiments, the antenna may include a Digital antenna array (DAA) or other types of smart antenna, comprising multi channels digital beamforming, which may include the use of fast Fourier transform or other algorithms. In embodiments, digital signal processing may be after analog-to-digital converters of receiver channels or before digital-to-analog converters of transmission. Digital signals may be transformed and combined in parallel to produce different output signals, wherein signals energies may be adjusted depending on the location of the intended device receiver. Beam forming of directional electromagnetic energy beams may include signal processing methods, e.g., maximum likelihood beamforming wherein the noise is modeled as a stationary Gaussian white random processes while the signal waveform as deterministic (but arbitrary) and unknown; Bartlett beamforming utilizing various spectral analysis algorithms; Capon beamforming utilizing a minimum-variance distortion less response beamforming algorithm; multiple signal classification beamforming algorithms, ESPRIT algorithms, and/or the like.

Importantly, and in contrast to systems known in the art, the wireless charging system according to embodiments disclosed herein is suitable for functioning in the open, outside of a building or other structure e.g., in plain air. By virtue of directing one or more directional electromagnetic energy beams towards the determined location of the device receiver, the instant system will function to deliver substantial amounts of electrical energy to receivers without relying on the reflection of electromagnetic energy off of walls, furniture, and the like, as is required by other systems to deliver a non-trivial amount to power suitable for charging or powering an electrical device.

In embodiments, the directional electromagnetic energy beams have a beam width of less than 360° (for a unidirectional antenna), and less than 180° for a wall mounted or planer antennas. In embodiments, the beams are dynamically adjusted according to the distance from the base charger, and/or the direction of movement of the intended device receiver. In embodiments, the directional electromagnetic energy beams directed to the intended receiver have a beam width of less than or equal to about 60°, or 55°, or 50°, or 45°, or 40°, or 35°, or 30°, or 25°, or 20°, or 15°, or 10°, or 5°, or 3° or 1°.

In one embodiment, the wireless charging system is configured to direct one or more directional electromagnetic energy beams to a device receiver, and/or for one or two way electronic communication between a transmitter/device receiver of the wireless charging system and a transmitter/device receiver of the device receiver within a frequency range, e.g., comprises antenna elements and associated circuitry, software and control systems, for operating in frequency bands from about 20 KHz to about 50 KHz, and/or from about 150MHz to about 900 MHz, and/or from about 900 MHz to about 1.8 GHz, and/or from about 1.6 GHz to about 2.0 GHz, and/or from about 2.0 GHz to about 8.0 GHz, and/or from about 3 GHz to about 300 GHz.

In an embodiment, the wireless charging system is configured to direct one or more directional electromagnetic energy beams to a device receiver, and/or for one or two way electronic communication between a transmitter/device receiver of the wireless charging system and a transmitter/device receiver of the device receiver within a frequency range, e.g., comprises antenna elements and associated circuitry, software and control systems, for operating in frequency bands of 900 MHz, 2.5 GHz, 5.250 GHz, or 5.8 GHz.

In an embodiment, the wireless charging system is configured to direct one or more directional electromagnetic energy beams to a device receiver, and/or for one or two way electronic communication between a transmitter/device receiver of the wireless charging system and a transmitter/device receiver of the device receiver within a frequency range, e.g., comprises antenna elements and associated circuitry, software and control systems, for operating in frequency bands within the "5G" range which include low-band, mid-band or high-band millimeter-wavelengths having frequencies from about 24 GHz up to 54 GHz, and/or mid-band 5G using microwave wavelengths having frequencies from about 2.3-4.7 GHz, and/or high-band 5G wavelengths using frequencies of 24-47 GHz. These frequencies may be utilized for power transmissions, bidirectional electronic communication between the wireless charging system and a device receiver, or any combination thereof.

In any of such embodiments, the wireless charging system may be configured to direct one or more directional electromagnetic energy beams to a device receiver within a frequency range which is different from the frequency range at which the bidirectional communication between the wireless charging system and the device receiver takes place. For example, the wireless charging system may be configured to direct one or more directional electromagnetic energy beams to a device receiver within a frequency range of less than 3 GHz (below 5G), and conduct bidirectional communication between the wireless charging system and the device receiver at a frequency range at or above 3GHz (at 5G), and/or the reverse.

In embodiments, one or more of the system antennae comprise a flat panel antenna array, which may be configured for use as a transmitter. The flat panel antenna array may include a number of antenna elements, which in some embodiments comprise from about 64 to 256 antenna elements which may be distributed in an equally spaced grid. For example, the flat panel antenna array may have an 8×8 grid with a total of 64 antenna elements, up to a 16×16 grid to have a total of 256 antenna elements. A plurality of flat panel antenna arrays may also be configured and connected to function as a single, larger flat panel antenna array, e.g., 4 16X16 flat panel antenna arrays may be connected and arranged to function as one 32X32 flat panel array having 1024 elements. The more elements, typically the wider range and higher power transmission capabilities of the antenna. Alternate configurations may also be possible including circular patterns, polygon arrangements, parabolic arrangements, hyperbolic arrangements, and/or the like. The flat panel antenna array may also be broken into numerous pieces or subparts and distributed across multiple surfaces (multi-faceted).

In embodiments, antenna elements of the wireless charging system operate in single array, a pair array, a quad array, or any other suitable number of arrays or arrangement configured in accordance with the desired application. In embodiments, the antenna arrays may include any number of antenna elements capable of transmitting the one or more directional electromagnetic energy beams. Generally, with more antenna elements, a wider range and higher power transmission capacity may be achieved. Alternate configurations may also be possible including circular patterns or polygon arrangements, parabolic arrangements, multidirectional arrangements, amongst others.

Suitable antenna elements include flat antenna elements, patch antenna elements, dipole antenna elements, and/or the like which are suitable antennae for wireless power transmission. The physical dimensions of the antennae including size, shape and orientation vary based on the requirements of the transmitter. In addition, the antennae may comprise a single or multicomponent antenna array arranged to form a three-dimensional special arrangement. Antenna element materials may include any suitable material that may allow radio signal transmission with high efficiency, good heat dissipation and/or the like.

In addition, antenna elements may have at least one polarization or a selection of polarizations. Such polarization may include vertical pole, horizontal pole, circularly polarized, left hand polarized, right hand polarized, or a combination of polarizations. The selection of polarizations may vary in dependency of transmitter characteristics. In addition, antenna elements may be located in various surfaces of the base charger.

In embodiments, the directed directional electromagnetic energy beams may be produced within a single frequency range. In other embodiments, the directed directional electromagnetic energy beams may be produced within a plurality of frequency ranges either simultaneously, intermittently, or both, being directed from the same base charger, from different base chargers, or from multiple base chargers. The antennas may be optimized to direct the directional electromagnetic energy beams depending on the topography of the 3D space, e.g., using dipole antennas for directing power at nearer distances. In some embodiments, the antennas may be capable of manual adjustment to further optimize their efficiency. Likewise, a plurality of channels may be utilized for different types of power transmission and/or electronic communication.

### Device Receiver

In embodiments, the wireless charging system either comprises a device receiver or is configured to function with a device receiver, wherein each device receiver is configured to receive and convert one or more of the directional electromagnetic energy beams into electrical energy and provide the energy to the attached electrical device, which in embodiments includes the device receiver being configured to store at least a portion of the electrical energy in an intermediary electrical storage device and release the stored energy to at least one electrical device. The device receiver is further configured to direct electrical energy from the intermediary electrical storage device to a connected electrical device in electrical connection with the device receiver, to charge and/or power the connected electrical device.

The device receiver may be configured for powering or charging a client device is it associated with or coupled to, e.g., via the device receiver having a removable electrical connection with the electrical device, for example in the form of a dongle, within a case, and/or the like. In other embodiments, the device receiver is integrated with and/or within the electrical device.

In embodiments, the device receiver is configured to be removably electrically connected to the electrical device via a disengageable connecter. Suitable electrical connectors include USB connectors, lightning connectors, and the like, configured such that a male end on one of the two engages with a female end of the other to establish electrical and/or electronic communication between the device receiver and the electrical device.

In embodiments, the device receiver comprises one or more receivers capable of receiving and harvesting energy from one or more directional electromagnetic energy beams originating from the one or more transmitters of the base charger and/or from another device receiver(s) as discussed in more detail herein.

Device receivers suitable for use herein include at least one antenna element, a receiver controller and/or circuitry configured to harvest power from the one or more directional electromagnetic energy beams directed thereto, e.g., rectifying and/or power converting circuitry, and the like. The device receiver further includes one or more electronic communication components. In some embodiments, power converter may include electronic switched mode DC-DC converters, e.g., buck converters of either a step up or step-down arrangement, which can provide high efficiency. The device receiver may comprise one or more capacitors and/or inductors with associated circuitry situated to receive the electrical energy before power converters. The capacitor may ensure sufficient current is provided to an electronic switching device (e.g., switch mode DC-DC converter), so it may operate effectively. When charging an electrical device, for example a phone or laptop computer, initial high-currents that can exceed the minimum voltage needed to activate operation of an electronic switched mode DC-DC converter, may be required. In such a case, a capacitor may be added at the output of the device receiver to provide the extra energy required. Afterwards, lower power can be provided. For example, a few percent of the total initial power that may be used while having the phone or laptop still build-up charge.

The device receiver may comprise a receiver controller in electronic communication with a single antenna or an array of antennas configured to receive the one or more directional electromagnetic energy beams from the power transmitter, and the associated circuitry, hardware and programming configured to convert the energy harvested from the one or more directional electromagnetic energy beams e.g., the radio frequency electromagnetic radiation, into electrical energy usable by an attached or associated electrical device. In embodiments, the receiver further comprises an intermediate electrical storage device, arranged to receive the harvested power prior to the power being directed to the attached electrical device.

In embodiments, the device receiver incudes at least one rectifier configured to convert the electrical energy from AC to DC. Applicant has discovered that the amount of usable power delivered from an antenna is affected by the impedance of the antenna, and the impedance of associated circuitry, and that the impedance is related to the power and/or the wavelength of the signal received by the antenna. Applicant has discovered that the amount of usable power which may be harvested from a directional electromagnetic energy beam is directly related to how well the impedance of the antenna is matched to the impedance of the RF to DC in electrical communication with the antenna. In embodiments, the impedance of the antenna is matched to the impedance of the RF to DC converter and associated circuitry. In one embodiment, this matching is done by means of switching the output of the antenna according to the power being received by the antenna to match the impedance of the RF to DC converter. In other embodiments, the impedance of the RF antenna is dynamically adjusted to match the impedance of the RF to DC converter, and/or the impedance of the RF to DC converter is dynamically adjusted to match the impedance of the RF antenna, based on the power being received by the antenna.

Other types of conditioning may be applied as well. For example, the device receiver may include a voltage conditioning circuit or system which increases or decreases the voltage of the electrical energy as required by the client device. The device receiver may also include a means to control the flow of energy from the intermediate electrical storage device to an associated electrical device e.g, a relay, power transistor, and/or the like with associated circuitry or systems required to convey the electrical energy from the device receiver to an intermediary electrical storage device, and then from the intermediary electrical storage device to the client device.

In embodiments, the device receiver further comprises an antenna configured for power transmission and the associated control systems and circuitry, which may comprise a transmitter/receiver or transceiver configured to both receive and transmit the one or more directional electromagnetic energy beams. In embodiments, device receiver comprises one or more transmitter/receiver or transceivers configured for unidirectional or bidirectional electronic communication between and with the wireless charging system or a component thereof, and/or another device receiver, and/or an electrical device associated therewith, which may utilize components of the power transmission circuitry, or may be a stand-alone system, and/or may utilize components and systems of an attached electrical device.

In some embodiments, the device receiver is configured to transmit and/or receive data, e.g., status indications, control signals, and/or the like, too and from the transmitter in order to exchange data in real-time or near real-time. The control signals may contain status information about the client device, the device receiver, an end user of the electrical device, relative to the directing of the directional electromagnetic energy beams, authorization status, requests for power, and/or the like. Examples of status information include present location information of the device, an amount of charge received, an amount of charged used, an amount of charge required, user account information, and/or the like.

In some embodiments, the device receiver may be integrated with, and/or configured to utilize components and/or systems conducted by an attached electrical device, integrated into the electrical device, and/or shared with the client device. For example, the device receiver may utilize one or more networking systems of the client device to communicate with the wireless charging system.

The bidirectional electronic communication between the wireless charging system and the device receiver may be conducted intermittently or on an essentially continuous basis, depending on whether the transmitter and device receiver are communicating synchronously (i.e., the transmitter is expecting to receive control data from the device receiver). Additionally, the wireless charging system may transmit the one or more directional electromagnetic energy beams to the device receiver, irrespective of whether the wireless charging system and the device receiver are communicating control or other signals.

In some embodiments, the device receiver is configured by the wireless charging system prior to establishing effective harvesting parameters used by the device receiver to allow harvesting of energy from the one or more directional electromagnetic energy beams.

Some of the information in the control data may inform the transmitter how to effectively produce and transmit, and in some cases adjust, the features of the one or more directional electromagnetic energy beams, begin transmission, update location information, request the wireless charging system to cease power transmission to the device receiver, and/or the like.

In embodiments, a device receiver may be configured to analyze the amount and quality of the power being received and provide information to the wireless charging system directed to adjustments and/or optimization of system.

In embodiments, the device receiver comprises one or more antenna elements, which may comprise any type of antenna capable of transmitting and/or receiving signals in frequency bands used by the wireless charging system. Antenna elements may include vertical or horizontal polarization, right hand or left-hand polarization, elliptical polarization, or other polarizations, as well as any number of polarization combinations. Using multiple polarizations can be beneficial in devices where there may not be a preferred orientation during usage or whose orientation may vary continuously through time, for example a smartphone or portable gaming system. For devices having a well-defined expected orientation (e.g., a two-handed video game controller), there might be a preferred polarization for antennas, which may dictate a ratio for the number of antennas of a given polarization. Types of antennas in antenna elements of the device receiver, may include patch antennas, which may include polarization that depends upon connectivity, i.e., the polarization may vary depending on from which side the patch is fed. In some embodiments, the antenna may be a patch antenna, capable of dynamically varying the antenna polarization to optimize wireless power transmission. Communications Components

In embodiments, the device receiver further includes one or more wireless communication components configured for electronic communication e.g., data, between the device receiver and one or more other devices of the system and/or other device receivers, client devices, and/or the base charger. Different antenna, rectifier or power converter arrangements are possible for a device receiver depending on the intended use. In embodiments, the communications components include those of established or commercial utility, and include those configured for Bluetooth^{®}, Bluetooth Low Energy (BLE), Wi-Fi, NFC, ZigBee^{®}, variants thereof, and/or the like. Such components may be hardware and/or software based, may be present as application specific integrated circuits, and/or incorporated into other components of the system.

### Intermediary Electrical Storage Device

In embodiments, the device receiver further includes an intermediary electrical storage device in electrical communication between a power output of the device receiver and the power input of the electrical device coupled to the device receiver. The device receiver is configured to receive and harvest electrical energy from one or more directional electromagnetic energy beams provided by the wireless charging system, which is then provided as a power output of the device receiver. This electrical energy is then directed into the intermediary electrical storage device where it is stored and/or maintained until it is delivered to the power input of the electric device attached or coupled to the device receiver for powering and/or charging of the device, and/or until the device receiver utilizes at least a portion of this power to direct one or more secondary directional electromagnetic energy beams to another device receiver.

In embodiments, the intermediary electrical storage device comprises one or more capacitors, inductors, batteries, and/or the like, capable of storing energy that may be then converted into an appropriate DC current and voltage for charging or powering an electric device. In embodiments, the intermediary electrical storage device comprises a capacitor and associated circuitry required to use the capacitor for electrical storage, e.g., timers, resistors, operational amplifiers, transistors, and/or the like.

One significant challenge to providing power wirelessly is that the amount of power that may be transmitted under current regulatory guidelines is less than or equal to one (1) watt, often times much less than one watt. Applicants have discovered that by configuring the device receiver to direct power first into an intermediary electrical storage device, the relatively small amount of power that may be transmitted wirelessly may be stored therein, and when a larger amount of power has been harvested and stored, the power may be released or directed to a load with higher efficiency than would otherwise be possible utilizing the harvested power directly for charging or powering an electrical device.

In addition, the device receiver may be configured to acquire and harvest power autonomously, (regardless of the state of the attached electrical device), such that while the electrical device is not in need of power, the device receiver, by virtue of the intermediary electrical storage device, may be utilized to store energy that will eventually be requested by the device. In addition, the intermediary electrical storage device may be employed to store energy utilized by the device receiver to direct one or more secondary directional electromagnetic energy beams to another device receiver in a peer-to-peer power grid arrangement as disclosed herein. Again, this may be done autonomously. The device receiver may also be configured to store energy in the intermediary electrical storage device regardless of the authorization status of the device, and only release the same to power or charge the attached electrical device upon the attached electrical device being authorized to receive power from the wireless charging system. This allows for user billing, authentication, and other financial objectives to be obtained, and/ or allow for providing a secure system wherein only authorized devices may utilize power provided by the wireless charging system.

### Peer-To-Peer Wireless Meshed Power Local Area Network

In embodiments, the wireless charging system further comprises or is configured for peer-to-peer power transmission, wherein each device receiver further comprises a transmitter and/or a transceiver in electronic communication with a device receiver controller, configured to direct at least one secondary directional electromagnetic energy beam from a first device receiver towards a determined location of at least one second device receiver utilizing a least a portion of the energy stored in the intermediary electrical storage device of the first device receiver, independent of a status of the electrical device in electrical communication with the first device receiver, the second device receiver, or both, the second device receiver configured to receive and convert one or more of the secondary directional electromagnetic energy beams into electrical energy and store at least a portion of the electrical energy in a corresponding intermediary electrical storage device of the second device receiver, and to direct electrical energy from the intermediary electrical storage device of the second device receiver to a corresponding attached second electrical device to charge and/or power the attached second electrical device.

In embodiments, the wireless charging system is configured to form a meshed wireless power grid local area network and/or a meshed ad-hoc wireless power grid local area network comprising transmission of directional electromagnetic energy beams from the base charger too the device receiver, and peer-to-peer directional wireless power distribution comprising transmission of directional electromagnetic energy beams between two or more of the device receivers, wherein the device receivers and the base chargers present are nodes of the meshed network. In this embodiment, the wireless charger system is further configured for bidirectional electronic communication between the base charger and the device receiver, and/or between two or more device receivers, and/or between the base charger and a first device receiver through one or more secondary device receivers. In embodiments, the electronic communication may be conducted via a local area data network, an ad-hoc data network, a wide area data network, a wireless computer network, a meshed network, a wired computer network, intranets, the internet, a radio data network, a cellular data network, a cellular data network provided at least in part by the electrical device or client device, a meshed ad hoc wireless power grid local area network, or any combination thereof.

Accordingly, by instituting Peer-to Peer wireless power delivery, the limits of the system, referring to both the amount of power that may be provided and the physical distance or area that may be covered by the wireless charging system, may be larger than the physical area covered by the base chargers. Peer-to-Peer power distribution allows for a nearly infinite area to be serviced, limited only by the presence of device receivers in a concatenation (i.e., a chain) from the edge of the network to the base charger.

As noted above, it is to be understood that reference to bidirectional electronic communication between any two components of the wireless charging system and/or any component of the wireless charging system and a device receiver, or other outside system or service, may include direct electronic communication, i.e., the component(s) is/are configured for direct electronic communication with the other entity, and/or the component is in electronic communication with the other entity vis-à-vis one or more other devices, components, managers, systems, device receivers, and/or transceivers coupled to the wireless charging system, which may further include the system controller. For example, reference to bidirectional electronic communication between the base charger and a device receiver may include the base charger being configured for direct electronic communication, and/or the base charger being communicatively coupled to the wireless charging system controller, and the wireless charging system controller being coupled to one or more electronic communication transmitters, device receivers, and/or transceivers which are separate from the power transmitters, such that the actual communication link between the base charger and the device receiver is through, and/or includes one or more other transmitter/device receiver-transceivers of the wireless charging system, which may further include the system controller and/or other systems, managers, services, and the like.

In some of such embodiments, the wireless charging system is arranged and configured such that the base charger and a first device receiver are in bidirectional electronic communication, wherein the first device receiver and the second device receiver are in bidirectional electronic communication with each other, wherein base charger is in bidirectional electronic communication with the second device receiver through the first device receiver, or a combination thereof, and wherein the base charger is configured to determine if the second electrical device in electrical communication with the second device receiver is, or is not authorized to receive wireless energy from the wireless charging system based on one or more predetermined criteria and wherein the first device receiver is configured such that when the determination of the authorization status results in the first electrical device not being authorized to receive wireless charging from the wireless charging system, the first device receiver is configured to prevent the intermediary electrical storage device of the first device receiver from directing power to the first electrical device in electrical communication with the first device receiver; and direct at least one secondary directional electromagnetic energy beam toward the determined location of the second device receiver utilizing a least a portion of the electrical energy stored in the intermediary electrical storage device of the first device receiver.

In embodiments, the wireless charging system is configured and arranged to determine if the electrical device is, or is not authorized to receive wireless energy from the wireless charging system based on one or more predetermined authorization criteria; upon receiving a request from the electrical device and/or receiving a request from a device receiver in electrical connection with the electrical device, which has been determined to be authorized to receive wireless charging from the wireless charging system configuring the device receiver to receive the one or more directional electromagnetic energy beams from the wireless charging system according to one or more configuring criteria, directing one or more directional electromagnetic energy beams from the one or more transmitters towards the device receiver of the electrical device at the determined location within the physical space, the device receiver receiving and converting one or more of the directional electromagnetic energy beams into electrical energy and storing at least a portion of the electrical energy in an intermediary electrical storage device, and directing the electrical energy from the intermediary electrical storage device to the connected electrical device in electrical connection with the device receiver, to charge and/or power the connected electrical device, wherein upon receiving a request from the electrical device and/or receiving a request from a device receiver in electrical connection with the electrical device which has been determined not to be authorized to receive wireless charging from the wireless charging system, configuring the device receiver to prevent receiving of the one or more directional electromagnetic energy beams from the wireless charging system according to one or more configuring criteria; and/or configuring the charging system to prevent directing one or more directional electromagnetic energy beams from the one or more transmitters towards the device receiver of the electrical device at the determined location within the physical space; and/or configuring the device receiver to prevent the directing of electrical energy from the intermediary electrical storage device to the connected electrical device in electrical connection with the device receiver.

In some of such embodiments, the wireless charging system is configured and arranged such that upon receiving a request from the electrical device and/or a device receiver connected to the electrical device, which has been determined to be authorized to receive wireless charging from the wireless charging system: configuring one or more other device receivers to direct one or more secondary directional electromagnetic energy beams towards the determined location of the device receiver within the physical space; the device receiver receiving and converting one or more of the secondary directional electromagnetic energy beams into electrical energy and storing at least a portion of the electrical energy in an intermediary electrical storage device; and directing the electrical energy from the intermediary electrical storage device to the connected electrical device in electrical connection with the device receiver, to charge and/or power the connected electrical device; wherein upon receiving a request from the electrical device and/or device receiver connected to the electrical device which has been determined not to be authorized to receive wireless charging from the wireless charging system: configures the device receiver to prevent receiving of the one or more secondary directional electromagnetic energy beams from one or more other device receivers according to one or more configuring criteria; and/or configures the device receiver to prevent the directing of electrical energy from the intermediary electrical storage device to the connected electrical device in electrical connection with the device receiver.

Some embodiments comprise multiple transmitters and/or multiple device receivers for powering a particular piece of electronic equipment, for example smartphones, tablets, music players, toys, and the like, having power requirements which exceed the amount of power providable by the system to a single device receiver.

### Tracking of Receiver Locations - Handoff of Charging

In embodiments, the device receivers harvests energy transmitted from the wireless charging system transmitter(s) that is received into (by) the device receiver's antenna. The power is then rectified, conditioned, and transferred to the intermediary electrical storage device. In embodiments, the device receiver then sends the resulting electrical energy from the intermediary electrical storage device to the electrically connected device to power or charge the device. In alternative embodiments, the power may be transferred directly to the electrically connected device to power or charge the device. Upon movement of the device receiver from the location (e.g., a first location) to another location (e.g., a second location) the wireless charging system may engage another antenna, and/or another transmitter, and/or configure the transmitter to direct the one or more directional electromagnetic energy beams to the second location of the device, thereby "following" the device while providing power thereto via the one or more directional electromagnetic energy beams such that the directional electromagnetic energy beam remains "aimed" at the location of the device receiver.

### System Managers and User Interfaces

In embodiments, the wireless charging system may further include one or more system or function managers, which may be present as hardware (API) software, virtual, or a combination thereof.

In embodiments, the client or electrical device associated with a device receiver may include, or be configured to utilize a Graphic User Interface (GUI) for managing interactions within wireless charging system. The GUI may be associated with an executable program loaded into a non-volatile memory and/or may be run as a web-based app. In some embodiments, the electrical devices may include a database for storing information related to the device receiver, power status, power schedules, IDs, account information, pairing and any information necessary for receiving power from the wireless charging system. Such a system management GUI may be configured to run on a computer included in, or associated with the wireless charging system, or may run on a remote server that may be in the Internet cloud, an intranet, a fog computing cloud, and/or the like. The system management GUI may provide interaction between the end users or operators and the software within the wireless charging system, and be configured for use in configuration, monitoring, command, control, reporting, and any other system management functionality.

In embodiments, the device receiver and/or the electrical device associated with the device receiver may be configured to determine one or more status, which may include an authorization status, comprising a determination according to one or more authorization criteria of whether or not (if) the electrical device is, or is not authorized to receive wireless energy from the wireless charging system. In embodiments the authorization criteria comprises an authorization key; a lookup table; an identifier unique to the device receiver; an identifier unique to the electrical device; a user account; a service subscription; a prepaid subscription; a blockchain permission; a blockchain transaction; or a combination thereof.

In some of such embodiments, the wireless charging system is configured to cause the electrical device to present an indication perceivable by an end user of the electrical device indicating the authorization status of the electrical device, e.g., via the GUI and/or the GUI is configured to present an indication perceivable by an end user of the electrical device indicating the authorization status of the electrical device based on one or more criteria. In some of such embodiments, the system is configured such that when the determination of the authorization status results in the electrical device not being authorized to receive wireless energy from the wireless charging system, the indication perceivable by the end user allows the end user to change the authorization status of the electrical device.

In one or more embodiments, the GUI or other indication source is configured such that when the end user changes the authorization status of the electrical device, the action comprises, or is designed to result in a financial transaction. In some embodiments, the changing of the authorization status of the electrical device by the end user and/or the like comprises a cryptocurrency financial transaction, a blockchain financial transaction, or a combination thereof.

Likewise, in some embodiments, the when the determination of the authorization status results in the electrical device is not authorized to receive wireless energy from the wireless charging system, the device receiver is configured to prevent the intermediary electrical storage device from directing electrical power to the electrical device in electrical connection with the device receiver.

In embodiments, the determining of the authorization status resulting in a determination that the electrical device is authorized to receive wireless energy from the wireless charging system, the device receiver is configured to receive the one or more directional electromagnetic energy beams from the wireless charging system according to one or more configuring criteria, transfer this energy to the intermediary electrical storage device, and then transfer this energy to the associated device e.g., charging a battery and/or directly powering the device.

In embodiments, the GUI and/or system utilizes configuring criteria comprising one or more of a time stamp; a level of charge of the electrical device; an identification variable specific to the electrical device; a power requirement of the electrical device; a predetermined criterion; a multiplexing criterion, or a combination thereof.

In an embodiment, the device receiver is configured to request wireless energy delivery from the wireless charging system based at least in part on a level of charge of the connected electrical device, wherein the level at which a request will be made may be set in the GUI.

In embodiments, the wireless charging system comprises a system controller coupled to one or more base chargers in electronic communication with one or more microprocessors, which may include a wireless power transmission manager app, system, and/or the like, as embedded software, hardware, or a combination thereof, which may further include an application programming interface e.g., an API, for one or more electronic communication systems and/or protocols, e.g., a Bluetooth Low Energy system or chip. The API may comprise a software application that is run on a mobile, laptop, desktop, server, or other processor equipped computing device. The wireless charging system may further include an antenna manager software or system configured to control an RF antenna array that may be used to deliver the one or more directional electromagnetic energy beams.

The wireless charging system may further comprise one or more additional application programming interfaces and or be configured to execute a plurality of functions, including the establishing of a connection, ending a connection, sending data, receiving data, determining a status of a device or device receiver, and the like according to one or more embodiments disclosed herein. Client devices may include a device receiver app or system configured for executing one or more of the functions and/or providing data required by the wireless charging system, an application programming interface, or a combination thereof.

In embodiments the GUI may be a software module that may be downloaded from any application store and may run on any operating system, including iOS and Android, amongst others. The client device may also communicate with the wireless charging system via a one or more communication standards such as a short-range wireless personal area network e.g., Bluetooth, to provide information that may be of use for wireless charging system.

In embodiments, a wireless power transmission manager system or software may be used in order to manage the directing of directional electromagnetic energy beams by the wireless charging system, which may include one or more software modules hosted in memory and executed by a processor inside a computing device. The wireless power transmission manager system may include a local application GUI, or host a web page GUI, from where a user may see options and statuses, as well as execute commands to manage the wireless charging system. The computing device, which may be cloud-based, fog based, and/or may be connected to the wireless charging system through standard communication protocols, including Bluetooth, Bluetooth Low Energy, Wi-Fi, or ZigBee, amongst others.

The various systems may exchange information with one-another in order to control access by and directing of the directional electromagnetic energy beams (power transmission) to device receivers associated with various client devices. Functions controlled by a wireless power transmission manager system may include scheduling power transmission for individual devices, prioritizing between different client devices, accessing credentials for each client, tracking physical locations of device receivers relative to a base charger, broadcasting messages, determining authorization status, account information, and/or any functions required to manage the wireless charging system.

Computing device may be connected to the wireless charging system through network connections. Network connections may refer to any connection between computers including intranets, local area networks (LAN), virtual private networks (VPN), wireless area networks (WAN), Bluetooth, Bluetooth Low Energy, Wi-Fi networks, , and ZigBee, cellular networks, and/or the like.

### Cloud or Remote Service Providers

In some embodiments, the wireless charging system includes a cloud service provider in electronic communication with the system controller. In embodiments, the cloud service provider includes system controller services, information distribution services, and the like and may be configured, controlled, and monitored via a GUI.

In some implementations, the cloud service provider is electronically coupled to the system controller and/or another component of the wireless charging system. In some embodiments, the cloud service provider is implemented as computer hardware and software including any number of components required for running a desired set of applications, including any number of processors, random access memory modules, physical storage drives, wired communication ports, wireless communication ports, and the like. In an example, the cloud service provider is implemented using one or more components of computing device. In these embodiments, cloud service provider executes any software required to a host system controller and/or the system controller system, including software able to manage user credentials, device identification, device authentication, device authorization, usage and payments associated with one or more users, blockchain transactions, handle service requests, information requests, store and read data related to one or more users, and the like. In other embodiments, cloud service provider additionally includes databases for storing user data, device data, payment data, and the like.

In some embodiments, the system controller is configured to manage power transmission from one or more base chargers to one or more device receivers, credentials associated with mobile device users, billing associated with wireless power transmissions, and the like. In these embodiments, the system controller is hardware and software configured to issue commands to one or more base chargers, including commands to begin, pause, or stop transmitting power to one or more wireless power device receivers, and the like. In an example, cloud service provider functions substantially similar to computing device, the system controller functions to perform wireless power management services, or a combination thereof.

In some embodiments, cloud service provider executes any software required to host any information distribution service. Examples of such software include software able to store and read data related to one or more users, perform analytics on data, and the like. In other embodiments, information distribution service is hardware and software configured to collect usage data, billing data, demographic data, and the like from the system controller, base charger, device receiver, and/or client device. Examples of data include total time spent charging, total energy transmitted to a device, average amount of energy delivered monthly to a device, locations where energy has been transmitted to a mobile device, mobile device user demographic descriptors, and the like.

In other embodiments, the system controller is implemented as computer hardware and software including any number of components required for running a desired set of applications, including any number of processors, random access memory modules, physical storage drives, wired communication ports, wireless communication interfaces allowing coupling to antennas, and the like. In an example, the system controller is implemented using one or more components of a computing device.

### Power Transmission Management

In embodiments, the wireless charging system may include one or more power transmission manager functions, which may be configured in hardware, software, or a combination thereof. In embodiments, the power transmission manager functions are conducted by the system controller. In other embodiments, these functions are conducted by a separate integrated power transmission manager system. The power transmission manager functions may also be conducted by remotely located (e.g., cloud based) resources. In other embodiments, a cloud service provider is in communication with one or more base chargers and manages the directing of directional electromagnetic energy beams from the one or more base chargers.

In embodiments, one or more application program interface may be used to enable the effective interaction between the wireless charging system, e.g., a wireless power transmission manager application, and a corresponding application chip or system. For example, a Bluetooth API may be utilized to control a BTLE integrated chip or system.

### Databases

In some embodiments, the wireless charging system may include one or more databases for storing information related to base chargers, device receivers, electrical devices, power status, power schedules, device, and user IDs, pairing, account information, financial transaction information, and/or any information necessary for operation of the system. Database refers to an array of data structures within a computer's volatile or non-volatile memory but, that is used to organize, store, and retrieve data within the computer of the database. Databases may also be provided by various service providers over various networks, e.g., via secure internet communication. Databases may be implemented through known in the art database management systems (DBMS) such as, for example, MySQL, PostgreSQL, SQLite, Microsoft SQL Server, Microsoft Access, Oracle, SAP, dBASE, FoxPro, IBM DB2, LibreOffice Base, FileMaker Pro and/or any other type of database that may organize collections of data.

In embodiments, the wireless charging system may include one or more databases which may include a distributed system database, which may store relevant information associated with a client device, a client account, identifiers for a client device, voltage ranges for device receivers, location of a client device, signal strength and/or any other relevant information associated with a client device, and/or with a class or type of device according to function, manufacturer, software revision, hardware revision, connection, user preferences, account information, and/or the like. The one or more databases may also store information relevant to the wireless power local area network, including device receiver ID's, electrical device ID's, end-user handheld devices, system management servers, charging schedules, charging priorities, environment topology, and/or any other data relevant to the wireless charging system and/or the WiGL network.

In embodiments, in addition to the wireless charging system forming the wireless power grid local area network (and/or the ad hoc network, and/or the meshed network), the wireless charging system may further be configured to communicate (electronically) with one or more remote information services, control networks, central locations, e.g.., through a hub and spoke and/or fabric arrangement, via secure hypertext transfer protocols, and/or the like, which in embodiments includes communication via an intranet, the internet, and/or through the internet cloud and/or the like. The one or more remote information services may include financial services, blockchain services, accounting services, control services, maintenance services, security services, and/or the like.

In some embodiments, the wireless charging system may include, and/or may be in electronic communication with one or more back-up servers, e.g., via a local network, the cloud, and/or the like. The wireless charging system may further include a one or more manager systems or software coupled to a distributed system database.

In embodiments, the wireless charging system is configured to obtain, record, store and communicate past system status data, which may include details such as the amount of power delivered to an electrical device, billing information, the amount of energy that was transferred to a group of electrical devices or to an account associated with a user, the amount of time an electrical device has been associated with a base charger, pairing records, activities within the system, any action or event of any wireless power device in the system, errors, faults, and configuration problems, among others. Past system status data may also include power schedules, names, customer sign-in names, authorization and authentication credentials, encrypted information, physical areas of system operation, details for running the system, financial information, financial transactions, and/or any other system or user-related information.

Present system status data stored in a database may include the locations and/or movements in the system, configuration, pairing, errors, faults, alarms, problems, messages sent between the wireless power devices, and tracking information, among others.

According to some embodiments, databases associated with the wireless charging system may be configured to determine, store, and communicate future system status information, where the future status of the system may be forecasted or evaluated according to historical data from past system status data and present system status data. Such data may then be utilized by the wireless charging system and/or one or more managers to further enhance and/or optimize system performance and efficiency. In embodiments, these and other data may be utilized (learned from) via artificial intelligence including reactive algorithms, limited memory algorithms, theory of mind algorithms, and/or so-called "self-awareness" algorithms.

In embodiments, one or more machine learning and/or artificial intelligence algorithms are employed to best optimize the amount of power delivered to the devices and minimize the amount of power required by the wireless charging system. In embodiments, the wireless charging system may utilize one or more classification algorithms, e.g., Naive Bayes, decision tree, random forest, support vector machines; K nearest neighbors, and the like; and/or one or more regression algorithms, e.g., linear regression; lasso regression; logistic regression, multivariate regression, multiple regression; and the like.

In some embodiments, the wireless charging system utilizes one or more clustering algorithms, which may include K-Means clustering, fuzzy C-means algorithms, expectation-maximization algorithms, hierarchical clustering algorithms, and/or the like.

In some embodiments, records from all device databases in a wireless charging system may also be stored and periodically updated in one or more servers, in the cloud, and/or the like. In some embodiments, a plurality of wireless charging systems may form a wireless charging system network, and may include two or more servers. In alternative embodiments, a wireless charging system may be a stand-alone or a contained system.

In embodiments, the wireless charging system may further be configured to detect failures in any one of the various systems, e.g., the wireless power transmission system. Examples of failures in a power transmission system may include overheating of any component, malfunction, and overload, among others. If a failure is detected by the system, the wireless charging system may be configured to analyze the problem and utilize redundant capacity to mitigate and effect, while providing information of the failure to one or more system managers. After the analysis is completed, a recommendation or an alert may be generated and reported to owner of the power transmission system or to a remote cloud-based information service, for distribution to a system owner, manager, manufacturer and/or supplier.

In embodiments, the wireless charging system may further comprise a remote information service or system operated by the owner of the system, the manufacturer or supplier of the system, and/or a service provider. The remote management system may include business cloud, remote manager software or systems, backend servers where the remote manager may further include a general database. Functionality of backend server and remote manager may, in some embodiments, be combined into a single physical or virtual server.

In embodiments, the wireless charging system periodically establish a TCP or some other communication connection with a remote manager and/or the like for authentication, problem report purposes, reporting of status or usage details, and/or the like.

### Methods of Charging Devices

In embodiments, the wireless charging system provides electrical power to a plurality of device receiver devices via detecting the presence of a device receiver, determining a location of the device receiver, and directing one or more directional electromagnetic energy beams towards the location of the device receiver, wherein the device receiver is configured to harvest electrical energy from the one or more directional electromagnetic energy beams usable to power an electrical device.

In one embodiment, the wireless charging system first detects the presence of a device receiver within a 3D space proximate to a base charger of the system. At this point, the wireless charging system may query the device receiver, and/or provide notice to the device receiver of its presence. The device receiver may then respond, and/or may request power from the wireless charging system. In one embodiment, the wireless charging system then determines a location of the device receiver and begins directing one or more directional electromagnetic energy beams towards the location of the device receiver. The device receiver harvests energy from the one or more directional electromagnetic energy beams, transfers this energy to an intermediary storage device, and then directs the energy to the electrical device to charge or power the device.

In an embodiment, bidirectional electronic communication is then established between a transmitter or transceiver of the wireless charging system and a data device receiver or transceiver of the device receiver in some embodiments, transmitters and device receivers may communicate control data over using a wireless communication protocol capable of transmitting information between two processors of electrical devices (e.g., Bluetooth^{®}, BLE, Wi-Fi, NFC, ZigBee^{®}). For example, in embodiments implement Bluetooth^{®} or Bluetooth^{®} variants, the transmitter may scan for device receiver's broadcasting request signals, or a device receiver may transmit an advertisement signal to the transmitter. The request or advertisement signal may announce the device receiver's presence to the transmitter, and may trigger an association between the transmitter and the device receiver.

In some embodiments, a request or advertisement signal may communicate information that may be used by various devices (e.g., transmitters, client devices, sever computers, other device receivers) to execute and manage the forming and directing of one or more directional electromagnetic energy beams to the location of the device receiver. Information contained within the request or advertisement signal may include a device identifier (e.g., MAC address, IP address, UUID), the voltage of electrical energy received, client device power consumption, account information, authorization status information, and other types of data related to power transmission.

The transmitter may use a request or advertisement signal transmitted to identify the device receiver and, in some cases, further locate the device receiver in a two-dimensional space or in a three-dimensional space. Once the transmitter (i.e., the wireless charging system) identifies the device receiver, the transmitter may establish the connection associated in the transmitter with the device receiver, allowing the transmitter and device receiver to communicate control signals over one or more additional channels. The wireless charging system transmitter may also begin directing of the directional electromagnetic energy beams, i.e., one or more directional electromagnetic energy beams, from antennas of the transmitter's antenna array directed towards the location of the device receiver.

In embodiments, the device receiver may then measure the voltage, level of charge, and/or the like of the attached device, among other metrics related to effectiveness of the directing of the directional electromagnetic energy beams, which may in-turn be compared to the electrical energy received by the device receiver's antennas. The device receiver may generate control data containing the measured information, and then transmit control signals containing the control data to the transmitter.

In embodiments, various algorithms of the transmitter and/or the device receiver may be utilized to determine when it is necessary to adjust the transmission parameters and may also vary the configuration of the transmit antennas, in response to determining such adjustments are necessary. For example, the transmitter may determine the power received at a device receiver is less than maximal, based on the data received from the device receiver. The transmitter may then automatically adjust other parameters of the directing of the directional electromagnetic energy beams, but may also simultaneously continues to receive and monitor the voltage and/or other metrics being reported back from device receiver.

In embodiments, automated processes performed by the transmitter may select a subset of arrays to direct the one or more directional electromagnetic energy beams to the device receiver, and/or other device receivers having power simultaneously supplied by the system.

### System Optimization

As the need for charging of wireless devices increases, the amount of wireless energy in surrounding areas increases proportionality. This results in interference, self-interference, signal jamming, and self-jamming of communication signals. The instant disclosure utilizes a combination of machine learning and artificial intelligence algorithms which identify devices in need of charging, devices authorized to receive charging, and then assign a priority level to these devices. The system then determines the optimal frequency at which to deliver power to the device, and directs one or more directional electromagnetic energy beams from at least one transmitter to the location of the receiver of the eligible device in need of charging to charge the device.

In embodiments, the wireless charging system is configured to calibrate and/or configure the antennas transmitting the one or more directional electromagnetic energy beams, so that the antennas transmission signals having a more effective or efficient set of features (e.g., direction, beam width, phase, gain, amplitude, frequency, and/or the like). In some embodiments, a processor of the transmitter may automatically determine more effective features for producing and transmitting the one or more directional electromagnetic energy beams based at least in-part on one or more control signals received from the device receiver, or other device receivers, which may include historical or machine-learning algorithms.

In some embodiments, the transmitter may execute one or more software modules monitoring the metrics, such as voltage measurements, received from the device receiver. Algorithms may vary production and transmission of directing of the directional electromagnetic energy beams by the transmitter's antennas, to maximize the effectiveness of the directing of the one or more directional electromagnetic energy beams to the device receiver and may institute corrections to improve efficiency. When an optimal configuration for the system is identified, memory of the transmitter may store the configurations to keep the transmitter broadcasting at that highest level.

In embodiments, the wireless charging system at least intermittently checks and/or tracks the location of each of the device receivers previously identified, and searches for new device receivers to be added. The tracking and determination of positions may include one or more software packages, and/or employ one or more algorithms in the system controller, utilizing, for example, a CPU, processor, computer among others, for determining the location of each device receiver and the optimal parameters for directing the one or more directional electromagnetic energy beams to the location of each of the device receivers. In order to achieve the optimal efficiency of the system, the device receivers and/or the electrical device may be configured to provide feedback to the wireless charging system. Examples include the use of various sensors and/or circuits to determine power efficiency, refine location, identify movement and/or orientation of the device, e.g., via use of an accelerometer, a GPS sensor, and/or the like.

### Device Receiver Initiating Charge

In embodiments, the device receiver initiates the charging by sending a request for charging to the wireless charging system. In embodiments, the request may be issued based on one or more predetermine criteria such as a level of charge of the device. In some embodiments, the electrical device includes a GUI for interacting with the wireless charging system including issuing a request for charging or power delivery. In other embodiments, the process is automatic as long as particular requirements are met, e.g., the device being authorized to receive charge.

In embodiments, the device receiver and/or the electrical device may be in communication with the wireless charging system and exchange information such as a device ID, a charge status, account information, and/or the like. The wireless charging system controller may update its database and may send a copy to the electrical device including the IDs of available power transmitters within the system. Then, the electrical device may determine if the ID of a device is already associated with the ID of a power device receiver, and/or the like.

In some embodiments, this may further include the electrical device and/or the device receiver undergoing a pairing operation with the wireless charging system according to processes known in the art. In embodiments, the electrical device is configured to monitor various parameters, which are communicated to the wireless charging system by either the device or the device receiver attached thereto.

In embodiments, the wireless charging system may configure the device receiver to receive the one or more directional electromagnetic energy beams provided. For example, the system controller and/or another system or manager may send information directed to delay encoding, orthogonal frequency-division multiplexing (OFDM), code division multiplexing (CDM) or other binary coding for identifying a given electrical device including the device receiver. The wireless charging system may further authenticate the device and/or device receiver prior to directing one or more directional electromagnetic energy beams toward the location of the device receiver. If the device receiver is not authorized to device receiver power, the wireless charging system may either not deliver power, or prevent power delivered and harvested by the device receiver from being transferred from the intermediary electrical storage device to the power input or battery of the electrical device.

In some embodiments, the wireless charging system is configured to cause the electrical device to present an indication perceivable by an end user of the electrical device indicating the authorization status of the electrical device. In such embodiments, the wireless charging system is configured such that when the determination of the authorization status results in the electrical device not being authorized to receive wireless energy from the wireless charging system, the indication perceivable by the end user allows the end user to change the authorization status of the electrical device. In embodiments, when the end user changing the authorization status of the electrical device comprises a financial transaction, which in some embodiments comprises a cryptocurrency financial transaction, a blockchain financial transaction, or a combination thereof.

In an embodiment wherein the device and/or the device receiver is unknown to the wireless charging system, the wireless charging system may be configured to obtain information from device receiver such as type of device, manufacturer, serial number, total power required, battery level among other such information, and/or invoke or execute one or more programs suited to the authenticate the device. In addition, if multiple device receivers are requiring power, the wireless charging system may deliver power equally to all device receivers or may utilize a priority status for each device receiver. Such a priority status may be user defined and/or may be determined by an account type or status. In some embodiments, the user may choose to deliver more power to its smartphone, than to its gaming device. In other cases, the user may decide to first power its smartphone and then its gaming device.

Some embodiments utilize an existing infrastructure via an alternating current or direct current power source. In some embodiments an existing infrastructure is utilized via universal serial bus ("USB") ports and/or recharger ports, and the like, of electrical devices. In some of such embodiments, WiGL systems are coupled to a power source such as via plugging into an electrical outlet. In other embodiments, WiGL systems are wirelessly coupled to electrical devices via an interface plugged into one or more USB ports of the electrical devices.

. Still other embodiments can use or cause WiGL to use communications access technologies to multiplex smart energy such as, frequency division multiple access (FDMA); time division multiple access (TDMA); code division multiple access (CDMA); orthogonal frequency division multiple access (OFDMA); and/or spatial division multiple access (SDMA), and the like.

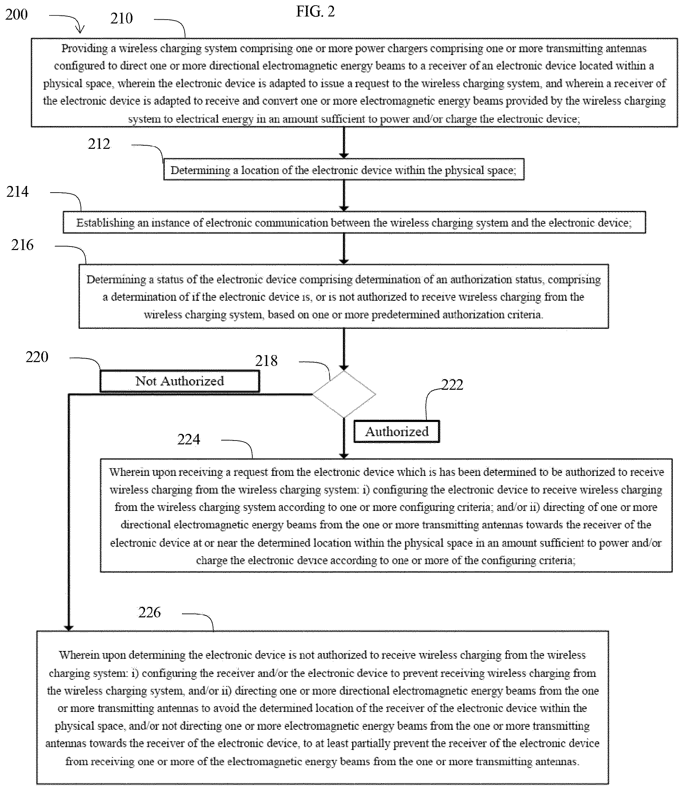

In embodiments, the system determines a status of the electrical device. This status may include a physical property of the electrical device, e.g., a level of charge of the device, information on the brand, capacity, and/or requirements of the device, and/or the like. As shown in FIG. 2, in some embodiments, the method 200 comprises providing a wireless charging system according to one or more embodiments disclosed herein 210, determining a location of the electrical device with a physical space of the wireless charging system 212, establishing electronic communication between the wireless charging system and the electrical device 214, and determining of a status of the electrical device 216, which in embodiments comprises determination of an authorization status of the device based on predetermined criteria according to a determination step 218.

If the determination of an authorization status of the device returns a negative or "not authorized" status 220, wherein the electrical device is not authorized to receive wireless charging from the wireless charging system, the method may include configuring the device receiver and/or the electrical device to prevent receiving wireless charging from the wireless charging system, and/or directing one or more directional electromagnetic energy beams from the one or more transmitters to avoid the determined location of the device receiver of the electrical device within the physical space, and/or not directing one or more electromagnetic energy beams from the one or more transmitters towards the device receiver of the electrical device, to at least partially prevent the device receiver of the electrical device from receiving one or more of the electromagnetic energy beams from the one or more transmitters 226.

If the determination 228 of an authorization status of the device returns a positive or "authorized" status 222, wherein the electrical device is authorized to receive wireless charging from the wireless charging system, the method may include configuring the electrical device to receive wireless charging from the wireless charging system according to one or more configuring criteria; and/or directing of one or more directional electromagnetic energy beams from the one or more transmitters towards the device receiver of the electrical device at or near the determined location within the physical space in an amount sufficient to power and/or charge the electrical device according to one or more of the configuring criteria 224.

This authorization status comprising a determination by the system whether or not the electrical device is authorized to receive wireless charging from the wireless charging system may be based on one or more predetermined authorization criteria. For example, in an embodiment wherein the wireless charging of an electrical device is provided on a fee-based arrangement, such as via subscription. When the system determines that the device is authorized to receive wireless charging from the wireless charging system, a "positive" authorization is obtained. When the system determines that the device is not authorized or unauthorized to receive wireless charging from the wireless charging system, a "negative " authorization is obtained.

In embodiments, the determining of the authorization status comprises determining if the electrical device is, or is not associated with a user account authorized to receive wireless charging from the wireless charging system, based on one or more predetermined authorization criteria.

In some embodiments, the authorization criteria include an authorization key, a lookup table, an identifier unique to the electrical device, an indication of the electrical device comprising an active service subscription, an indication of the electrical device comprising an active prepaid subscription, or a combination thereof.

In embodiments, the subscription verification comprises a machine-to-machine (M2M) process. In embodiments, the device to be charged receives a subscription request message for a subscription target resource. In embodiments, the subscription request message contains identification information of the electrical device and/or identification information of the of the wireless charging device. The verification may further include a checking step, wherein the wireless charging system determines whether or not the first device has a right for the subscription target resource.

In embodiments, the process may further include a determination by the wireless charging system whether or not the first device is compatible with, and/or what the optimum parameters are for wireless charging of the first device and/or if the resources are available to the wireless charging system, based at least partially on the identification information of the electrical device.

When the electrical device and the wireless charging device are determined to be compatible, the process may include a step comprising transmitting a notification message to the wireless charging device, the notification message including the identification information of the first device, identification information of the M2M device, and parameter information indicating a verification request; and receiving a response message from the wireless charging device in response to the notification message.

In embodiments, a privilege check for the subscription request may be performed by the wireless charging system based at least partially on the identification information of the first device and the response message may comprise a result of the privilege check performed by the wireless charging device.

In embodiments, the privilege check performed by the wireless charging device includes checking whether or not the first device has a right capable of transmitting a notification message to the wireless charging device. In some embodiments, the privilege check performed by the wireless charging device includes checking whether or not the first device has a right capable of configuring subscription for transmitting a notification message to the wireless charging device.

In one or more embodiments, the process may further comprise transmitting a temporary acceptance message for the subscription request message to the first device before the step of transmitting the notification message to the wireless charging device. In some embodiments, the process may further comprise determining whether or not a result of the privilege check performed by the wireless charging device is successful. When the result of the privilege check is successful, transmitting a subscription grant message to the first device. When the result of the privilege check is failure, cancelling the resource subscription. In embodiments, when the result of the privilege check is failure, transmitting a message for indicating that the resource subscription has been canceled to the first device, which in some embodiments the subscription request message comprises subscription information for creating a subscription resource, which may also include temporarily storing the subscription information.

In some embodiments, the subscription request message may comprise subscription information for creating a subscription resource in the first device. In such embodiments, the process may further comprise creating a subscription resource based on the subscription information.

In embodiments, the identification information of the first device is stored in creator attribute information of the subscription resource and the notification message may be generated when a notification event occurs in the device and the notification event comprises a status change of the subscription target resource. In other embodiments, the notification message is generated in the wireless charging system irrespective of an occurrence of a notification event.

In some embodiments, the identification information of the first device comprises address information indicating an originator of the subscription request message, and the identification information of the wireless charging device comprises address information indicating a notification target of the notification message. In one or more embodiments, the resource corresponds at least in-part to a data structure capable of being uniquely addressed using a unique address. In embodiments, the response message type information of the subscription request message indicates one of a blocking request, a synchronous non-blocking request, or an asynchronous non-blocking request.

In other embodiments, a method for determining and granting access of a device to be charged by the wireless charging system via subscriptions between the wireless charging system and the device may include receiving a subscription request associated with a machine-to-machine configuration, and/or a machine-to-machine network server. Responsive to the receipt of a notification associated with the received request, determining the device associated with the received notification, which may include an originator of the received request; and transmitting, to the device a notification message associated with the received notification. In embodiments, the step of determining includes comparing the received subscription request with at least one previously received subscription and/or comparing the received subscription request with a set of subscribed events stored in a table, e.g., a traffic table and/or the like. In embodiments, the method further includes the step of responding to the originator of the request subsequent to the step of determining. In embodiments, the method includes the step of updating a traffic table to reflect the received subscription. In embodiments, the received request is or comprises a hypertext transfer protocol request.

In embodiments, a method for authenticating a wireless device to be charged includes accessing a network via wireless communication with the wireless charging device. This may include utilizing one or more authentication information elements transmitted between the wireless charging device and the device in a bidirectional exchange involving one or more messages, the one or more authentication information elements including data for use in an authentication handshake procedure involving the one or more messages and for establishing that both the wireless charging device and the device possess a common or specific cryptographic key, and/or one or more of a beacon frame, an association request frame, and an association response frame, and wherein the data includes an arbitrary number that can be used just once in a cryptographic communication, e.g., a "nonce", for use in an authentication handshake procedure; and a message integrity check value for use in the authentication handshake procedure. In embodiments, the method may further comprise receiving one or more further authentication information elements received by one or more of the devices, which may be based on exchange of the one or more authentication information elements and the one or more further authentication information elements.

In embodiments, one or more authentication information elements are transmitted from the device to the wireless charging device.

In embodiments, at least some of the steps performed are done in parallel with the authentication procedure. In embodiments, the data includes a key identifier indicative of which key of a plurality of pre-shared keys is to be used in the authentication procedure. In some embodiments, the authentication procedure comprises transmitting a first authentication information element from the wireless charging device to the device, the first authentication information element including a first nonce value; subsequently transmitting a second authentication information element from the device to the wireless charging device, the second authentication information element including a second nonce value and a Message Integrity Check value; and subsequently transmitting a third authentication information element from the wireless charging device to the device, the third authentication information element including a further Message Integrity Check value, wherein the authentication information elements include the first authentication information element and the third authentication information element; or the second authentication information element.

In embodiments, the data between the wireless charging device and the device to be charged includes one or more uniform resource identifiers, a timestamp parameter, or a combination thereof.

In embodiments, the system and/or the method further comprises causing the electrical device to present an indication perceivable by an end user of the electrical device, indicating the authorization status of the electrical device. This may be via a network transmission originated by the wireless charging system to the electrical device, or originated by an ancillary device associated with the wireless charging system, e.g., an access control server or other access control function or system. The indication may be via text (SMS) message, may result in a graphic message displayed on the electrical device, an automated telephone call, a haptic indication, and/or the like.

In some embodiments, wherein the determining of the authorization status results in the electrical device not being authorized to receive wireless charging from the wireless charging system, a negative authorization result, the method further comprises causing the electrical device to present an indication perceivable by the end user of the electrical device. In some embodiments the method further comprises allowing the end user to change the authorization status of the electrical device to being authorized to receive wireless charging from the wireless charging system.

In some embodiments, allowing the end user to change the authorization status of the electrical device to being authorized to receive wireless charging from the wireless charging system comprises a request for, and a verification of a financial transaction which ultimately results in a transfer of funds. This may include a conventional currency operated device wherein the intended end user may provide currency directly to a recipient device and/or a card-operated device whereby the user paying by card is connected to a credit card transaction center to obtain an authorization code. This may also include the use of prepaid cards and other RFID credit cards for paying small amount offline without the need of signing a credit card voucher. This may include cryptocurrency, blockchain currency or transactions, and/or the like.

In other embodiments, and authorization payment may be made via one or more online payment methods, e.g., PayPal, via communication with a bank account direct debit system and a back-end pay-by-phone server computer system, and/or the like so that fees can be directly debited from users' bank accounts, credit card accounts, or telephone payment accounts. In this manner, a user can have multiple payment options including swiping a contactless IC prepaid card, via a contactless IC card reader unit or paying by dialing a cell phone via the remotely controllable pay-by-phone unit according to commonly understood systems known in the art.

In embodiments, wherein the determining of the authorization status results in the electrical device being authorized to receive wireless charging from the wireless charging system (a positive authorization result), the method further comprises and/or the system is configured to configure the electrical device (or the device receiver associated with the electrical device) to receive wireless charging from the wireless charging system according to one or more configuring criteria. This may include providing various frequencies to the device, and/or switching of various frequencies of the directional electromagnetic energy beams directed to the device according to a predetermined schedule.

In a related embodiment, the electromagnetic energy beams is not directed to the device, or is only partially directed to the device, but is instead broadcast to an entire area. The ability of the device to receive the wireless charging is controlled by switching of the various frequencies and/or utilizing packet switching and/or the like according to a schedule determined by the wireless charging system and/or the electrical device to enable the electrical device to receive adequate power for charging.

In embodiments, a positive authorization result includes the method or the system being configured to directing of one or more directional electromagnetic energy beams from the one or more transmitters towards the device receiver of the electrical device at or near the determined location within the physical space in an amount sufficient to power and/or charge the electrical device according to one or more of the configuring criteria, as compared to a negative authorization result wherein directing the electromagnetic energy beam in the direction of, or to the location of the unauthorized device is avoided. In doing so, at least a portion of the energy that would be received by an authorized device is prevented from being received by an unauthorized device.

In some embodiments, the determining of a status comprises a determination of one or more physical properties and/or states of the electrical device, and directing of the one or more directional electromagnetic energy beams from the one or more transmitters towards the device receiver of the electrical device at or near the determined location within the physical space in an amount sufficient to power and/or charge the electrical device, based on at least one of the physical properties and/or states of the electrical device and/or based on one or more predetermined criteria.

In some embodiments, wherein the authorization status results in the electrical device not being authorized to receive wireless charging from the wireless charging system, the method further comprises and/or the system is configuring to configure the device receiver and/or the electrical device to prevent receiving wireless charging from the wireless charging system. This may be achieved via a network connection, and/or may be included in or in unison with the electromagnetic beam directed towards the electrical device.

Likewise, wherein a negative authorization status is determined, the method further comprises or the system is configured to direct one or more directional electromagnetic energy beams from the one or more transmitters to avoid the determined location of the device receiver of the unauthorized electrical device within the physical space, and/or the system stops directing one or more electromagnetic energy beams from the one or more transmitters towards the device receiver of the electrical device, to at least partially prevent the device receiver of the electrical device from receiving one or more of the electromagnetic energy beams from the one or more transmitters.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims.

## Claims

1. A wireless charging system, comprising:
a system controller in electronic communication with at least one base transmitter coupled to a power source, configured to direct one or more directional electromagnetic energy beams from the transmitter to a location of a device receiver at a distance greater than or equal to 1 m from the transmitter;
the device receiver configured to receive and convert the one or more directional electromagnetic energy beam into electrical energy and store at least a portion of the electrical energy in an intermediary electrical storage device, and to direct electrical energy from the intermediary electrical storage device to a connected electrical device to charge and/or power the connected electrical device.

2. The wireless charging system of claim 1, wherein the device receiver is configured to be removably electrically connected to the electrical device via a disengageable connecter.

3. The wireless charging system of claim 1, wherein the system controller is configured to determine a location of the device receiver within a physical space and upon motion of the device receiver within the physical space, update the location of the device receiver.

4. The wireless charging system of claim 1, configured for peer-to-peer power transmission, wherein a first device receiver comprises a transmitter or a transceiver in electronic communication with a receiver controller, configured to direct at least one secondary directional electromagnetic energy beam from the first device receiver towards a location of at least one second device receiver utilizing at least a portion of energy stored in the intermediary electrical storage device of the first device receiver, independent of a status of any one device receiver.

5. The wireless charging system of claim 4, wherein the status of any one device receiver comprises an authorization status of if the device receiver is authorized, or is not authorized to direct received energy to an attached electrical device.

6. The wireless charging system of claim 5, wherein the authorization status comprises: an authorization key; a lookup table; an identifier unique to the device receiver; an identifier unique to the electrical device; a user account; a service subscription; a prepaid subscription; a blockchain permission; a blockchain transaction; or a combination thereof.

7. The wireless charging system of claim 6, wherein the authorization status is base at least in part on an amount of power directable to the attached electrical device.

8. The wireless charging system of claim 5, further configured to cause an indication perceivable by an end user of the attached electrical device indicating the authorization status of the device receiver to direct received energy to the attached electrical device.

9. The wireless charging system of claim 5, configured such that when the authorization status is the device receiver is not authorized to direct received energy to the attached electrical device, the system causes an indication perceivable by an end user of the attached electrical device which allows the end user to change the authorization status.

10. The wireless charging system of claim 9, wherein the end user changing the authorization status comprises a financial transaction.

11. The wireless charging system of claim 10, wherein the financial transaction comprises a cryptocurrency financial transaction, a blockchain financial transaction, or a combination thereof.

12. The wireless charging system of claim 5, configured such that wherein the authorization status is not authorized, the device receiver is configured to receive one or more of the directional electromagnetic energy beams, one or more of the secondary electromagnetic energy beams, or both, from the wireless charging system and convert into electrical energy and store at least a portion of the electrical energy in a corresponding intermediary electrical storage device, and to prevent the directing of electrical energy from the intermediary electrical storage device to the attached electrical device.

13. The wireless charging system of claim 12, wherein the device receiver is further configured such that wherein the authorization status is not authorized, to direct one or more secondary directional electromagnetic energy beams from the device receiver towards a location of at least one other second device receiver utilizing at least a portion of energy stored in the intermediary electrical storage device of the device receiver.

14. The wireless charging system of claim 1, wherein the device receiver is configured to request wireless energy delivery from the wireless charging system based at least in part on a level of charge of the connected electrical device.

15. The wireless charging system of 1, wherein the system controller and a first device receiver are in bidirectional electronic communication,
wherein the first device receiver and a second device receiver are in bidirectional electronic communication with each other, and
wherein second device receiver is in bidirectional electronic communication with the system controller via the first device receiver.

16. The wireless charging system of claim 15, wherein the bidirectional electronic communication comprises a short-range wireless personal area network.

17. The wireless charging system of claim 1, wherein the system controller and a first device receiver are in bidirectional electronic communication at least in part via an electronic communications network provided by the connected electrical device.

18. The wireless charging system of claim 1, wherein the device receiver is configured to receive and convert a plurality of different directional electromagnetic energy beam into electrical energy at the same time or essentially the same time.

19. A method of powering an electrical device, comprising:
directing one or more directional electromagnetic energy beams from a transmitter of a wireless charging system to a device receiver connected to an electrical device through an intermediary electrical storage device; and
directing electrical energy from the intermediary electrical storage device to the electrical device to power or charge the electrical device;
wherein the wireless charging system is according to any one of claims 1 through 18.

20. The method of claim 19, wherein the directing electrical energy from the intermediary electrical storage device to the electrical device to power or charge the electrical device comprises, or is at least partially based on a financial transaction.
